# EUROPÄISCHE PATENTSCHRIFT

(11) **EP 2 751 441 B1**
(45) Veröffentlichungstag und Bekanntmachung des Hinweises auf die Patenterteilung: **27.04.2016**
(21) Anmeldenummer: 12758765.7
(22) Anmeldetag: 22.08.2012
(51) Int. Cl.: F16D 65/097

(54) **BREMSBELAGANORDNUNG FÜR EINE FAHRZEUGBREMSE**
BRAKE PAD ARRANGEMENT FOR A VEHICLE BRAKE
SYSTÈME DE GARNITURE DE FREIN POUR FREIN DE VEHICULE

(30) Priorität: 01.09.2011 DE 102011112247
(43) Veröffentlichungstag der Anmeldung: 09.07.2014
(73) Patentinhaber: Lucas Automotive GmbH, 56070 Koblenz (DE)
(72) Erfinder: MALLMANN, Markus, 56291 Pfalzfeld (DE); STAHL, Peter, 53474 Bad Neuenahr-Ahrweiler (DE); RÜDELL, Wolfgang, 56321 Brey (DE)
(74) Vertreter: Thum, Bernhard
(86) Internationale Anmeldenummer: PCT/EP2012/003568
(87) Internationale Veröffentlichungsnummer: WO 2013/029765

(56) Entgegenhaltungen:
- DE-A1-102009 006 285
- GB-A- 2 109 065
- JP-A- 4 258 532
- JP-A- 11 325 133
- JP-A- 2011 017 371
- US-A- 3 638 765
- US-A- 3 977 499
- US-A1- 2005 067 235

## Beschreibung

Die vorliegende Erfindung betrifft eine Bremsbelaganordnung für eine Fahrzeugbremse mit einem Bremsbelag bzw. Reibbelag, einer Belagrückenplatte und einer Dämpfungsplatte, die an der Belagrückenplatte angeordnet ist.

Derartige Bremsbelaganordnungen sind aus dem Stand der Technik bekannt und beispielsweise in den deutschen Offenlegungsschriften DE 196 02 037 A1 oder DE 10 2006 052 178 A1 offenbart. Die im Stand der Technik beschriebene Bremsbelaganordnung weist eine Belagrückenplatte auf, wobei an der einen Seite der Belagrückenplatte ein Reibbelag und auf der gegenüberliegenden Seite eine Dämpfungsplatte angeordnet ist. Die Dämpfungsplatte ist aus dünnem Blech hergestellt und umfasst weiterhin seitlich abragende Fortsätze, welche nach dem Anbringen an der Belagrückenplatte seitlich in einem rechten Winkel an dieser anliegend umgebogen werden, um die Dämpfungswirkung der Dämpfungsplatte zu verstärken. Diese Fortsätze liegen in Einbaulage der Bremsbelaganordnung an einem zugehörigen Abschnitt des Bremsträgers einer Fahrzeugbremse an, um dort ebenfalls eine dämpfende Zwischenlage zu schaffen.

Ferner ist in dem Dokument DE 102009006285 A1 eine Scheibenbremse für ein Kraftfahrzeug beschrieben, welche eine Führung umfasst, in der wenigstens eine Bremsbelaganordnung bremswirksam verlagerbar geführt ist. Die Bremsbelaganordnung weist einen Bremsbelagträger auf, an dem ein Fahrzeugbremsbelag angebracht ist, der mit einer Bremsscheibe zum Erzielen einer Bremswirkung in Wechselwirkung bringbar ist. Eine Komponente von Bremsbelagträger und Führung weist eine Haltezunge und die andere Komponente von Bremsbelagträger und Führung weist einen Aufnahmebereich auf.

Die Dämpfungsplatte und die dazugehörigen Fortsätze sind dafür vorgesehen, bei einer Scheibenbremse auftretende Reibschwingungen zu unterbinden bzw. zu dämpfen, die zu Geräuschemissionen führen können, welche allgemein als "Quietschen" bekannt sind. Der Nachteil bei derartigen Bremsbelaganordnungen liegt darin, dass das Anbringen sowie die dabei erfolgende Umformung der Fortsätze der Dämpfungsplatte an der Belagrückenplatte einen hohen Aufwand mit sich bringen. Überdies ergibt sich beim Herstellen der Dämpfungsplatte durch zum Beispiel Stanzen aufgrund der Einstückigkeit der Dämpfungsplatte inklusive der Fortsätze ein relativ großer Verschnitt. Ein weiterer Nachteil liegt darin, dass die Fortsätze an der Dämpfungsplatte bei unterschiedlich großen Scheibenbremsen ebenfalls unterschiedlich zu gestalten sind, was zu einem weiteren, erheblichen Änderungsaufwand führt.

Es ist Aufgabe der vorliegenden Erfindung, eine Bremsbelaganordnung der eingangs bezeichneten Art bereitzustellen, die bei unterschiedlich großen Scheibenbremsen verwendet werden kann und dennoch zur Reduzierung der Herstellungskosten beitragen kann.

Diese Aufgabe wird durch eine Bremsbelaganordnung mit den Merkmalen des Anspruchs 1 gelöst.

Die Bremsbelaganordnung weist ein separates Dämpfungselement auf, das zur Vermeidung von Reibschwingungen an der Bremsbelaganordnung vorgesehen ist. Das separate Dämpfungselement der erfindungsgemäßen Bremsbelaganordnung ist derart geformt, dass es an der Belagrückenplatte anliegen kann, um eine Dämpfungswirkung bei auftretenden Reibschwingungen zu erzeugen. Dadurch kann auf die im Stand der Technik beschriebenen Fortsätze der Dämpfungsplatte verzichtet werden. Das separate Dämpfungselement bietet den Vorteil, dass es leicht an die Belagrückenplatte angebracht bzw. aufgeschoben werden kann und von der Größe der Dämpfungsplatte der Bremsbelaganordnung unabhängig ist. Somit kann ausgehend von der Dämpfungsplatte und dem separaten Dämpfungselement eine optimale Dämpfungswirkung erzeugt werden und das einheitlich hergestellte, separate Dämpfungselement unabhängig von der Größe der Belagrückenplatte oder der Dämpfungsplatte an der Bremsbelaganordnung bzw. an der Belagrückenplatte angeordnet werden.

Vorzugsweise liegt zumindest ein Teil des Dämpfungselements spielfrei an der Belagrückenplatte an, um eine Dämpfungswirkung zu erzielen. Hierbei ist es von Vorteil, wenn mehrere Anlageflächen anliegen, da hierdurch die Reibschwingungen verstärkt gedämpft werden können.

Eine bevorzugte Ausführungsform der Erfindung sieht vor, dass das Dämpfungselement seitlich an der Belagrückenplatte angeordnet ist bzw. auf diese aufgeschoben wird. Weiterhin kann das Dämpfungselement u-förmig ausgebildet sein, so dass die Schenkel des u-förmigen Dämpfungselements die Belagrückenplatte seitlich umfassen, um eine größere Kontaktfläche bzw. Auflagefläche und somit eine verbesserte Dämpfung zu erreichen. Vorzugsweise liegt auch zumindest ein Teil des Dämpfungselements spielfrei an der Seitenwange der Belagrückenplatte an, um eine Dämpfungswirkung zu erzeugen. Dieser Zwischenbereich des Dämpfungselements kann als Elastizität ausgebildet sein, d.h. eine materialinhärente Federwirkung entfalten und als Stütz- oder Haltekraft dienen.

Die Verbindung zwischen dem Dämpfungselement und der Belagrückenplatte kann über eine Rastverbindung, eine Klebeverbindung und/oder mit Hilfe einer Vorspannkraft erzeugt werden. Vorzugsweise ist die Verbindung lösbar. Eine Verbindung ist dazu vorgesehen, ein Verrutschen oder Verschieben des Dämpfungselements an der Belagrückenplatte zu verhindern, insbesondere in Längs- und/oder Querrichtung des Dämpfungselements relativ zu der Belagrückenplatte.

Für eine derartige Verbindung ist ein Fixierelement vorgesehen, das sich in Eingriff mit der Belagrückenplatte befinden kann, wobei das Fixierelement auf die Vorder-, Rückseite und/oder lateral auf die Belagrückenplatte einwirken kann. Vorzugsweise befindet sich das Fixierelement in Eingriff mit einem Fortsatz der Belagrückenplatte, welcher zum Führen der Bremsbelaganordnung in der Fahrzeugbremse vorgesehen ist.

In einer bevorzugten Ausführungsform ist das Fixierelement elastisch verformbar derart, dass es beim Aufschieben auf die Belagrückenplatte aufgrund elastischer Deformation eine Spannkraft erzeugen kann, die aufgrund der Anpresskraft eine Verbindung zwischen dem Dämpfungselement und der Belagrückenplatte erzeugt. Vorzugsweise befinden sich zwei oder mehrere Fixierelemente an dem Dämpfungselement, um dieses sicher an der Belagrückenplatte zu befestigen, um eine Dämpfungswirkung zu erzeugen. Derartige Fixierelemente tauchen bevorzugt paarweise, insbesondere gegenüberliegend, an dem Dämpfungselement auf. Diese beiden Fixierelemente können sich in einer Ebene befinden, zum Beispiel in einer Ebene parallel zur Belagrückenplatte. Überdies ist das Einwirken der Fixierelemente an dem Fortsatz der Belagrückenplatte erfahrungsgemäß möglich, um das Dämpfungselement an der Belagrückenplatte zu befestigen. Ein Fixierelement kann ein Arm sein, der von dem Dämpfungselement abragt und durch elastische Deformation eine Spannkraft erzeugen kann.

Erfindungsgemäß weist das Fixierelement mindestens ein Rastelement auf, das mit einer entsprechenden Ausnehmung bzw. einem entsprechenden Hinterschnitt in Eingriff bringbar ist. Hierbei sind jegliche Arten von aus dem Stand der Technik bekannten Verrastungen vorgesehen, die eine Verbindung, insbesondere ein Andrücken einer Fläche des Dämpfungselements an der Belagrückenplatte, erzeugen können. Hierbei kann sich auch die Ausnehmung bzw. der Hinterschnitt an dem Dämpfungselement und das entsprechende Rastelement an der Belagrückenplatte befinden.

Das Fixierelement kann überdies eine Ausstellung bzw. einen Ausschnitt oder einen Eingriffsschenkel aufweisen, die bzw. der mit einem entsprechenden Positionierungsvorsprung an der Belagrückenplatte in Eingriff bringbar ist. Die Ausstellung kann länglich bzw. oval sein, und auch bei der Positionierung des Dämpfungselements an der Belagrückenplatte behilflich sein. Der Positionierungsvorsprung kann in Form einer Positionierungswulst oder in Form eines Positionierungsstifts ausgebildet sein.

Von dem Dämpfungselement kann ein Stützarm abragen, der die Bremsbelaganordnung gegenüber einem Bremsträger der Fahrzeugbremse abstützt und/oder radial nach außen vorspannt. Vorzugsweise ist dieser Stützarm des Dämpfungselements an dem Fortsatz der Belagträgerplatte angeordnet, welcher die Bremsbelaganordnung gegenüber dem Bremsträger der Fahrzeugbremse führt. Somit kann eine Dämpfungswirkung nochmals verstärkt werden. An einem derartigen Stützarm kann ein Fixierelement der vorangehend beschriebenen Art angeordnet sein, welches das Dämpfungselement an der Belagrückenplatte fixiert.

Ebenso kann das Dämpfungselement in einem an der Belagrückenplatte angebrachten Zustand unter Vorspannung stehen, wobei es beim Einbau in einen Bremsträger unter schwingungsreduzierender Vorspannung aufgenommen wird.

Der Reibbelag verschleißt durch das in Kontakt treten des Reibbelags mit der Scheibenbremse der Fahrzeugbremse beim Bremsvorgang. Bei einem verschlissenen Reibbelag droht die Berührung der Scheibenbremse mit dem Teil des Dämpfungselements, der an der dem Reibbelag zugewandten Seite anliegt. Das Dämpfungselement kann einen Teilabschnitt oder einen abragenden Arm aufweisen, der an der dem Reibbelag zugewandten Seite angeordnet ist und in Richtung Bremsscheibe gerichtet ist. Beim Erreichen der Verschleißgrenze des Reibbelags kann der Teilabschnitt oder der Arm gegen die Bremsscheibe der Fahrzeugbremse anlaufen bzw. diese kontaktieren. Hierbei kann ein Warngeräusch erzeugen werden, welches auf einen Verschleiß des Reibbelags hinweist, bevor dieser vollends verschlissen ist.

Das erfindungsgemäße Dämpfungselement besteht vorzugsweise aus einem Formkörper, der insbesondere einteilig ausgebildet ist und aus einem Blech gebogen wird.

Ein Herstellen des Dämpfungselements aus Kunststoff mittels eines Spritzgussverfahrens ist ebenfalls möglich, wobei hierbei nicht nur ein verbessertes Dämpfungsverhalten, sondern auch eine kostengünstige Fertigung möglich ist. Bevorzugt wird das Dämpfungselement auf den seitlich von der Belagrückenplatte abragenden Fortsatz aufgeschoben. Durch ein derartiges Aufschieben ist die Lage des Dämpfungselements vorgegeben. Ein Fixierelement kann das Dämpfungselement gegen eine radiale Bewegung des Dämpfungselements bzw. gegen das Herunterrutschen des Dämpfungselements von dem Fortsatz der Belagrückenplatte sichern.

Bei einer bevorzugten Ausführungsform befindet sich ein zusätzliches Dämpfungsmaterial zwischen dem Dämpfungselement und der Belagrückenplatte. Vorzugsweise ist das Dämpfungsmaterial eine Klebeschicht oder ein klebriger Schaum, der zur Dämpfung aufgrund elastischer Eigenschaften und zur Befestigung des Dämpfungselements an der Belagrückenplatte vorgesehen ist. Vorzugsweise befindet sich das zusätzliche Dämpfungsmaterial an der Kontaktstelle bzw. an den Kontaktflächen zwischen dem Dämpfungselement und der Belagrückenplatte. Überdies sind weitere Materialien denkbar, die eine Dämpfungswirkung bzw. eine materialinhärente Federwirkung aufweisen.

Die vorliegende Erfindung betrifft ferner eine Scheibenbremse für ein Fahrzeugsystem mit einer Bremsscheibe und der erfindungsgemäßen Bremsbelaganordnung. Die Bremsbelaganordnung, insbesondere der Reibbelag, ist dafür vorgesehen, auf die Bremsscheibe einzuwirken, um eine Bremswirkung zu erzeugen. Hierbei wird die Bremsbelaganordnung relativ zu der Bremsscheibe bewegt, was bereits mehrfach aus dem Stand der Technik bekannt ist.

Im Folgenden wird eine Ausführungsform der Erfindung beispielhaft anhand der beigefügten Figuren erläutert. Es stellen dar:
- Fig. 1: eine Vorderansicht einer Bremsbelaganordnung, wobei die erfindungsgemäße Bremsbelaganordnung durch eine strichlierte Linie dem Stand der Technik gegenübergestellt ist;
- Fig. 2: eine Rückansicht der Bremsbelaganordnung, wobei die erfindungsgemäße Bremsbelaganordnung durch eine strichlierte Linie dem Stand der Technik gegenübergestellt ist;
- Fig. 3a: eine Vorderansicht des erfindungsgemäßen Dämpfungselements in Einbaulage;
- Fig. 3b-3d: unterschiedliche perspektivische Ansichten des Dämpfungselements;
- Fig. 4: eine Seitenansicht der Bremsbelaganordnung mit dem Dämpfungselement;
- Fig. 5: eine perspektivische Ansicht einer weiteren Ausführungsform des Dämpfungselements;
- Fig. 6: eine perspektivische Ansicht der in Fig. 5 gezeigten Ausführungsform;
- Fig. 7: eine Vorderansicht einer weiteren Ausführungsform der Bremsbelaganordnung;
- Fig. 8: eine Rückansicht der in Fig. 7 gezeigten Ausführungsform der Bremsbelaganordnung;
- Fig. 9: eine perspektivische Ansicht der in Fig. 7 gezeigten Ausführungsform der Bremsbelaganordnung;
- Fig. 10: eine Seitenansicht der in Fig. 7 gezeigten Ausführungsform;
- Fig. 11: eine vergrößere Schnittansicht der in Fig. 7 gezeigten Ausführungsform gemäß dem in Fig. 10 gezeigten Schnitt A-A;
- Fig. 12a: eine vergrößerte Vorderansicht des Dämpfungselements in Einbaulage der in Fig. 7 gezeigten Ausführungsform;
- Fig. 12b: eine vergrößere Rückansicht des Dämpfungselements in Einbaulage der in Fig. 7 gezeigten Ausführungsform;
- Fig. 13: eine perspektivische Ansicht der Belagrückenplatte mit angebrachtem Dämpfungselement nach einer weiteren Ausführungsform;
- Fig. 14: eine weitere perspektivische Ansicht der Belagrückenplatte mit der in Fig.13 gezeigten Ausführungsform;
- Fig. 15: eine Draufsicht auf die Rastverbindung zwischen der in Fig.13 gezeigten Ausführungsform und der Belagrückenplatte;
- Fig. 16: eine Ansicht der Belagrückenplatte mit der in Fig.13 gezeigten Ausführungsform nach Einbau in einen Bremsträger; und
- Fig. 17: eine Schnittansicht der Anordnung nach Fig. 16.

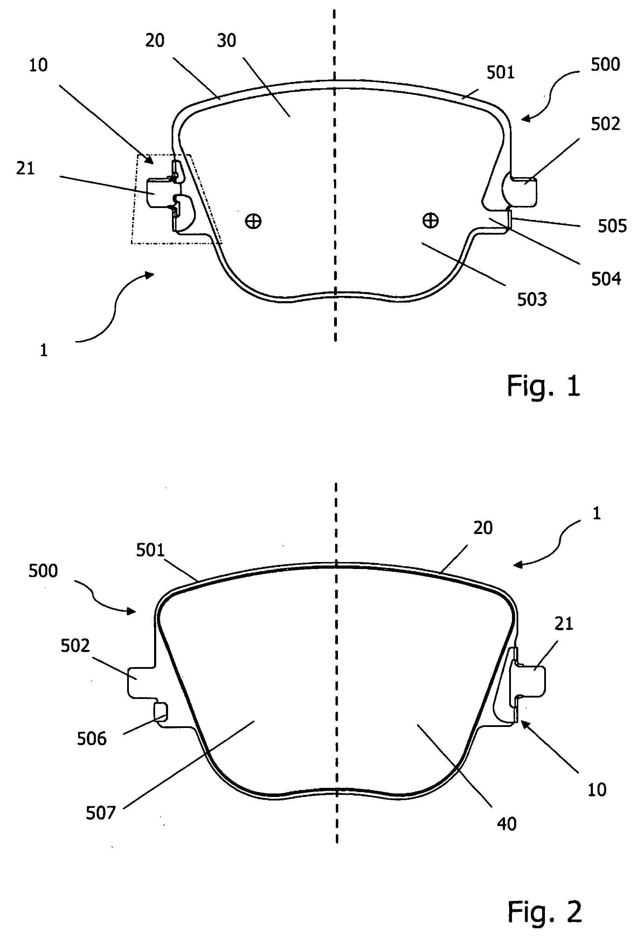

Fig. 1 zeigt eine Vorderansicht einer Bremsbelaganordnung, wobei die Bremsbelaganordnung 500 des Standes der Technik der Bremsbelaganordnung 1 mit dem erfindungsgemäßen Dämpfungselement 10 gegenübergestellt ist. Die im Stand der Technik gezeigte Bremsbelaganordnung 500 weist eine Belagrückenplatte 501 mit einem seitlich abragenden Fortsatz 502 auf, wobei die Belagrückenplatte 501 größtenteils von einer Dämpfungsplatte 503 überdeckt wird. Die Dämpfungsplatte 503 weist einen Fortsatz 504 auf, der in einer die Belagrückenplatte 501 umgreifenden Position dargestellt ist. Hierbei liegt der Teilabschnitt 505 des Fortsatzes 504 an der Seitenwange der Belagrückenplatte 501 an. Die linke Seite der in Fig. 1 dargestellten Bremsbelaganordnung 1, die das erfindungsgemäße Dämpfungselement 10 zeigt, weist eine Belagrückenplatte 20 auf mit einem seitlich abragenden Fortsatz 21. Auf diesem Fortsatz 21 ist das erfindungsgemäße Dämpfungselement 10 aufgeschoben. Die Belagrückenplatte 20 wird größtenteils von einer Dämpfungsplatte 30 überdeckt.

Fig. 2 zeigt eine Rückansicht der Bremsbelaganordnung, wobei wiederum der Stand der Technik der Bremsbelaganordnung 1 mit dem erfindungsgemäßen Dämpfungselement gegenübergestellt wird. Die im Stand der Technik gezeigte Bremsbelaganordnung 500 zeigt einen Reibbelag 507, der die Belagrückenplatte 501 größtenteils überdeckt. Weiterhin ist das distale Ende des Fortsatzes 504 als Anlagefläche 506 dargestellt, welches die Belagrückenplatte 501 umgreift. Auf der rechten Seite der in Fig. 2 dargestellten Bremsbelaganordnung befindet sich das erfindungsgemäße Dämpfungselement 10, welches auf den Fortsatz 21 aufgeschoben ist. Weiterhin ist ein Reibbelag 40 dargestellt, der die Belagrückenplatte 20 größtenteils überdeckt.

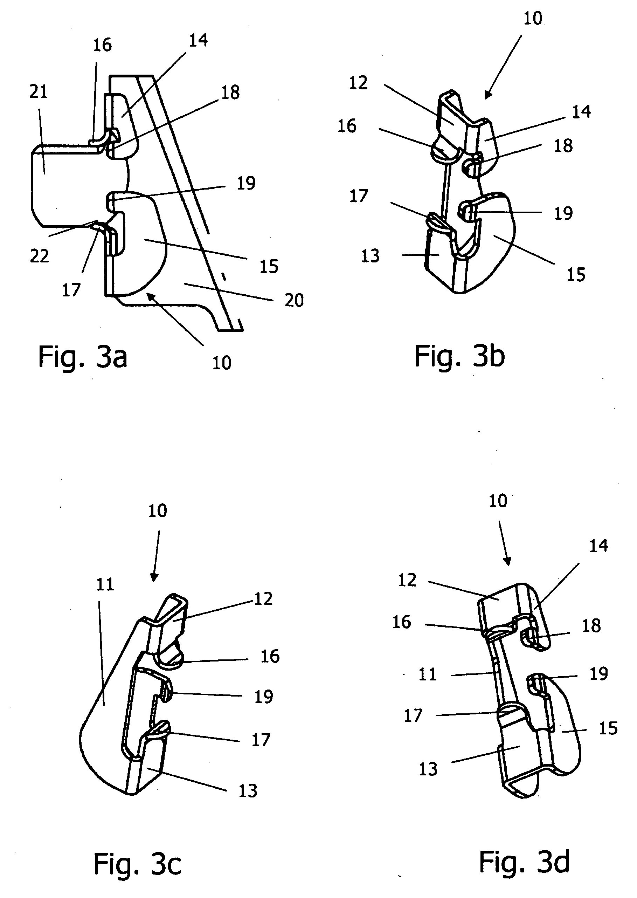

Fig. 3a-d zeigen das erfindungsgemäße Dämpfungselement 10. In Fig. 3a ist das Dämpfungselement 10 in Einbaulage dargestellt, wobei das Dämpfungselement 10 auf den Fortsatz 21 der Belagrückenplatte 20 aufgeschoben ist. Das Dämpfungselement 10 besteht aus einem Formkörper, der vorzugsweise aus einem metallischen Blech geformt ist. Das Dämpfungselement 10 ist u-förmig ausgestaltet, wobei die beiden Schenkel des u-förmigen Dämpfungselements rechtwinklig von dem dazwischenliegenden Verbindungsstück abragen derart, dass die Schenkel gegenüberliegend angeordnet sind. Das Dämpfungselement 10 ist ausgebildet, um die Belagrückenplatte 20 seitlich zu umgreifen, so dass alle innenliegenden Flächen des Dämpfungselements 10 an der Belagrückenplatte 20 anliegen. Derjenige Schenkel des u-förmigen Dämpfungselements 10, der im Einbauzustand auf der dem Reibbelag 40 zugewandten Seite angeordnet ist, weist eine Anlagefläche 11 auf, welche sich über die gesamte Bauteillänge erstreckt. Die Anlagefläche 11 ist dreiecks-flächig ausgebildet und verjüngt sich entsprechend zum oberen Ende des Dämpfungselements 10 hin. Die Anlagefläche 11 liegt spielfrei an der Belagrückenplatte 20 an, um eine Dämpfungswirkung zu erzeugen.

Derjenige Schenkel des Dämpfungselements 10, der der Anlagefläche 11 gegenüberliegend angeordnet ist und auf der der Dämpfungsplatte 30 zugewandten Seite angeordnet ist, weist einen oberen Haltebereich 14 und einen unteren Haltebereich 15 auf, die in der selben Ebene, gegenüberliegend und/oder beabstandet voneinander angeordnet ist bzw. sind. Der Umriss der Haltebereiche 14, 15 entspricht dem Umriss der gegenüberliegend angeordneten Anlagefläche 11. Aufgrund der sich verjüngenden Form des Umrisses weist der untere Haltebereich 15 eine mindestens doppelt so große Anlagefläche wie der obere Haltebereich 14 auf. An der jeweils dem anderen Haltebereich 14 bzw. 15 zugewandten Seite befindet sich eine Spannnase 18 bzw. 19, die von dem jeweiligen Haltebereiche 14 bzw. 15 abragt und sich zum Verbindungsabschnitt hin erstreckt. Die Spannnasen 18, 19 sind zur gegenüber angeordneten Anlagefläche 11 hin vorgespannt, so dass diese sich beim Aufschieben des Dämpfungselements 10 auf die Belagrückenplatte 20 elastisch aufweiten und dadurch eine Vorspannung erzeugen, die das Dämpfungselement 10 an der Belagrückenplatte 20 fixiert. Die Spannnasen 18, 19 sind dafür vorgesehen, damit das Dämpfungselement 10 keine Axialbewegung relativ zu der Belagrückenplatte 20 im Einbauzustand ausüben kann und um das Dämpfungselement 10 an die Belagrückenplatte 20 zu drücken und damit eine Anlagefläche zu erzeugen, die eine Dämpfungswirkung erzeugen kann.

Der Verbindungsabschnitt zwischen der Anlagefläche 11 und den Haltebereichen 14, 15 weist einen oberen Verbindungsabschnitt 12 und einen unteren Verbindungsabschnitt 13 auf, die beabstandet voneinander angeordnet sind. Der Freiraum zwischen dem oberen Verbindungsabschnitt 12 und dem unteren Verbindungsabschnitt 13 ist dafür vorgesehen, den Fortsatz 21 der Belagrückenplatte 20 in Einbaulage aufzunehmen. Von dem oberen Verbindungsabschnitt 12 ragt der obere Haltebereich 14 rechtwinklig ab und von dem unteren Verbindungsabschnitt 14 ragt der untere Haltebereich 15 rechtwinklig ab. Somit wird der obere Verbindungsabschnitt 12 und der obere Haltebereich 14 nur über die Anlagefläche 11 mit dem unteren Verbindungsabschnitt 13 und dem unteren Haltebereich 15 verbunden.

An dem oberen Verbindungsabschnitt 12 ragt eine Befestigungsnase 16 im Wesentlichen rechtwinklig und nach außen gerichtet ab, die dafür vorgesehen ist, das Dämpfungselement 10 in Einbaulage an dem Fortsatz 21 aufgrund elastischer Deformation der Befestigungsnase 16 zu fixieren. An dem unteren Verbindungsabschnitt 13 ragt eine Rastnase 17 ebenfalls im Wesentlichen rechtwinklig und nach außen gerichtet von dem unteren Verbindungsabschnitt 14 ab. Diese Rastnase 17 ist dafür vorgesehen, sich in Einbaulage in Eingriff mit einem Hinterschnitt 22 zu befinden, der an dem Fortsatz 21 der Belagrückenplatte 20 angeordnet ist. Der Hinterschnitt 22 weist eine einlaufende Schräge auf, wodurch bei der Rastverbindung das Dämpfungselement 10 an die Belagrückenplatte 20 gezwungen wird, um Spielfreiheit auch in Querrichtung zu gewährleisten. Dieser Hinterschnitt 22 ist derart an dem Fortsatz 21 angeordnet, dass die Rastverbindung erst erfolgt, wenn das Dämpfungselement vollständig auf den Fortsatz 21 aufgeschoben ist.

Primär sind die Befestigungsnase 16, die Rastnase 17 und die Spannnasen 18, 19 dafür vorgesehen, das Dämpfungselement spielfrei an der Belagrückenplatte zu fixieren, um aufgrund der anliegenden Flächen eine Dämpfungswirkung zu erzeugen. Überdies sollen diese Elemente ein Verrutschen oder Verschieben des Dämpfungselements 10 relativ zur Belagrückenplatte 20 verhindern.

Dämpfungsmaterial mit materialinhärenter Federwirkung kann zwischen dem Dämpfungselement 10 und der Belagrückenplatte 20 vorliegen, um die Dämpfungswirkung zusätzlich zu verstärken.

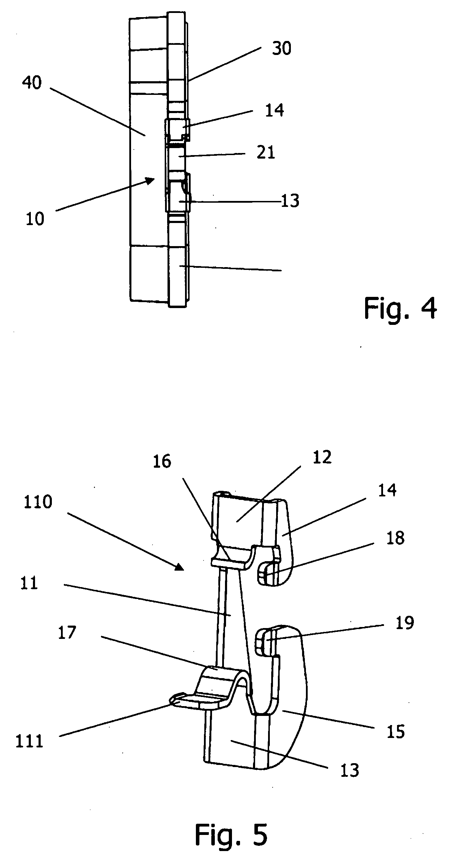

Fig. 4 zeigt eine Seitenansicht, in der das Dämpfungselement 10 auf dem Fortsatz 21 der Belagrückenplatte 20 aufgeschoben ist.

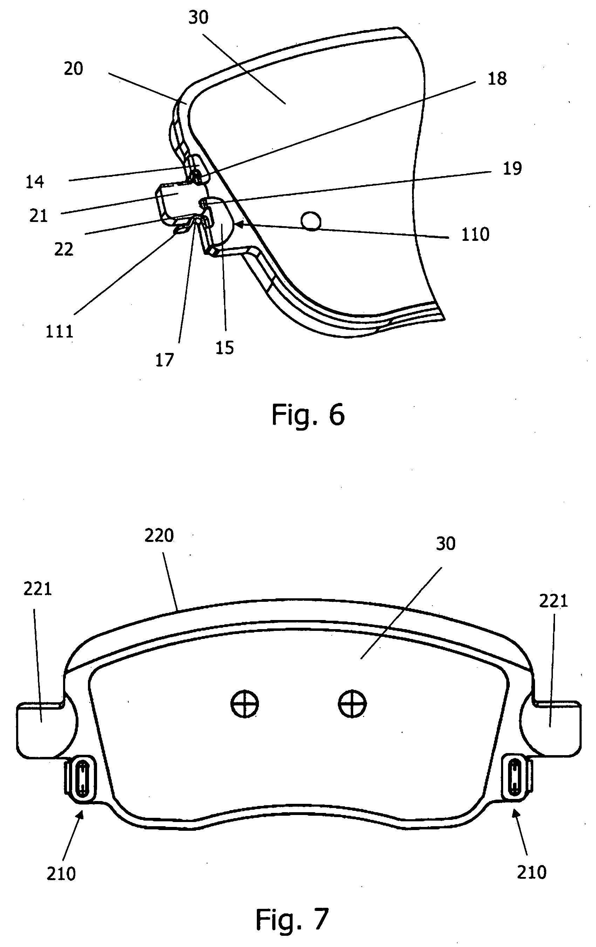

Fig. 5 und 6 zeigen eine weitere Ausführungsform des Dämpfungselements. Der einzige Unterschied zu dem vorangehend beschriebenen Dämpfungselement liegt darin, dass an dem distalen Ende der Rastnase 17, die von dem unteren Verbindungsstück 15 abragt, ein zusätzlicher Stützarm 111 angeordnet ist, der im Wesentlichen rechtwinklig von dem unteren Verbindungsabschnitt 13 abragt. Der Stützträger 111 des Dämpfungselements 110 stützt sich an einem Bremsträger einer Fahrzeugbremse (nicht dargestellt) ab, in der die Bremsbelaganordnung eingebaut ist. Die untere Fläche des Stützarms 111 ist dafür ausgebildet, die Bremsbelaganordnung radial nach außen vorzuspannen. Hierbei können zusätzlich Schwingungen gedämpft werden. Alle anderen Elemente und Funktionen des in den Fig. 5 und 6 dargestellten Dämpfungselements entsprechen den in Fig. 1 bis 4 beschriebenen Elementen und Funktionen.

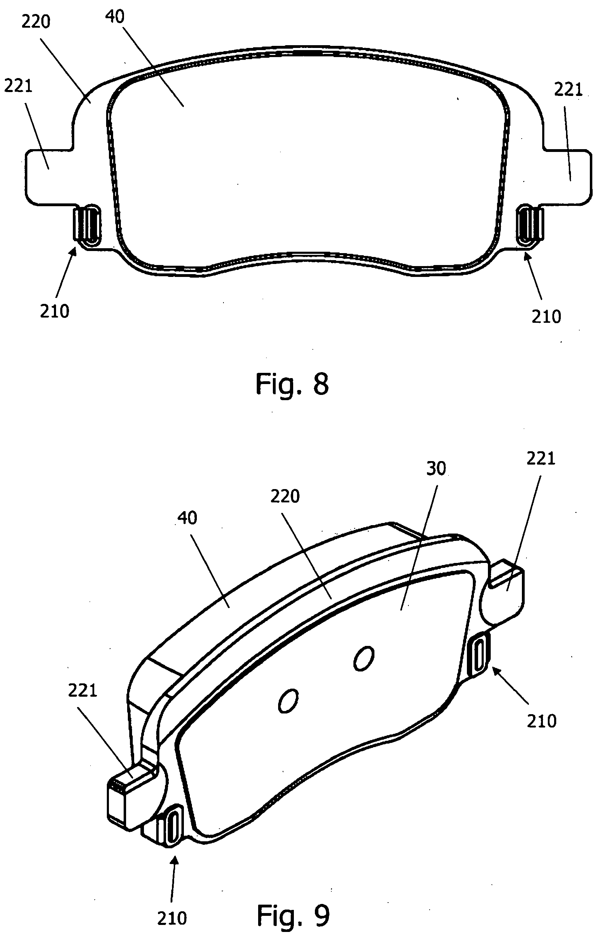

Eine weitere Ausführungsform der Erfindung wird in den Fig. 7 bis 12 veranschaulicht. Hierbei ist das Dämpfungselement 210 in Form einer u-förmigen Klammer ausgebildet, welche die Belagrückenplatte 220 seitlich umgreift. Die Fortsätze 221 der Belagrückenplatte 220 werden von dem Dämpfungselement 210 nicht umfasst, vielmehr umgreift das Dämpfungselement 210 die Belagrückenplatte 220 unterhalb des Fortsatzes 221. Das u-förmige Dämpfungselement 210 weist einen Verbindungsabschnitt bzw. Klammerabschnitt 214 mit zwei rechtwinklig davon abragenden Schenkeln auf, ähnlich den vorangehenden Ausführungsformen. Der Klammerabschnitt 214 ist dafür vorgesehen, die beiden Schenkel nach innen vorzuspannen, damit diese in Einbaulage bzw. in einer auf das Dämpfungselement aufgeschobenen Lage das Dämpfungselement 210 fest umschließen.

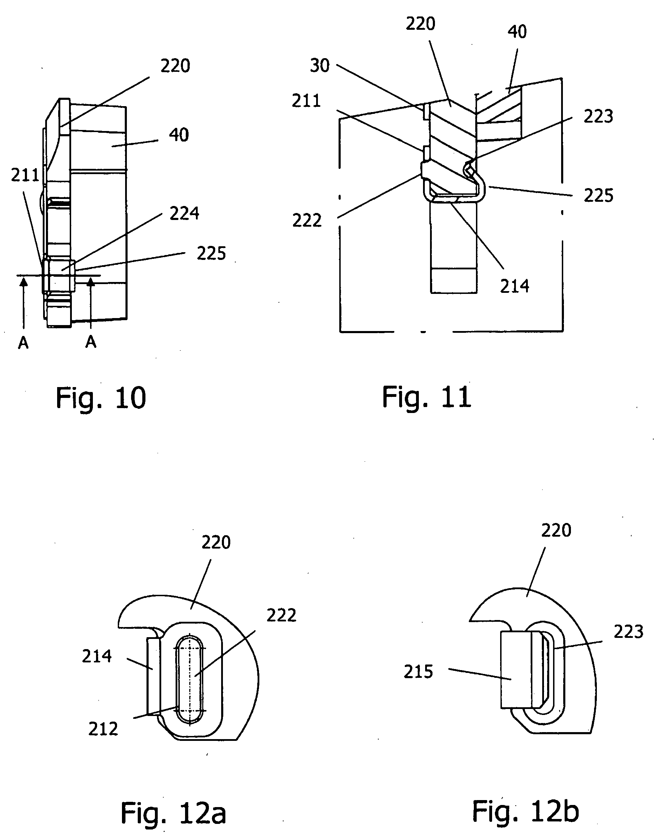

Der eine Schenkel des Dämpfungselements 210, der auf der dem Reibbelag 40 abgewandten Seite der Belagrückenplatte 220 angeordnet ist, definiert eine flächige, im Wesentlichen ovale Anlagefläche 211 mit einer Ausstellung 212. Der Teil der Belagrückenplatte 220, an dem die Anlagefläche 211 angeordnet ist, weist einen Positionswulst 222 auf. Die Ausstellung 211 ist derart ausgebildet, dass die Ausstellung 211 mit dem Positionswulst 222 in Eingriff bringbar ist, wie am besten in der Fig. 11 und 12a ersichtlich ist. Diese Verbindung kann bei der Montage für eine entsprechende Positionierung des Dämpfungselements 210 an der Belagrückenplatte 220 vorgesehen sein. Aufgrund der länglichen Ausgestaltung der Ausstellung 211 und des Positionswulsts 222 ist eine ordnungsgemäße Längsausrichtung des Dämpfungselements 210 an der Belagrückenplatte 220 gewährleistet.

Der andere Schenkel des u-förmigen Dämpfungselements 210, der an der der Dämpfungsplatte 30 zugewandten Seite angeordnet ist, weist einen Rastabschnitt 215 auf, der nach innen bzw. in Richtung Anlagefläche gebogen ist. An der Belagrückenplatte 220 ist eine Rastvertiefung 223 vorgesehen, die für den Eingriff mit dem Rastabschnitt geeignet ist, wie in Fig. 11 ersichtlich ist. Diese Rastvertiefung 223 kann durch einen Verformungsvorgang ausgebildet werden, wie zum Beispiel mittels eines Stempels, der in die Belagrückenplatte 220 eindringt. Hierbei kann das aufgrund des Verformungsvorgangs auf der gegenüberliegenden Seite aufgehäufte Material den hervorstehenden Positionierungswulst 222 bilden, der für den Eingriff mit der Ausstellung 211 vorgesehen ist. Alle anderen in Fig. 7 bis 12 dargestellten Elemente entsprechen den vorangehend beschriebenen Elementen und deren Funktionen.

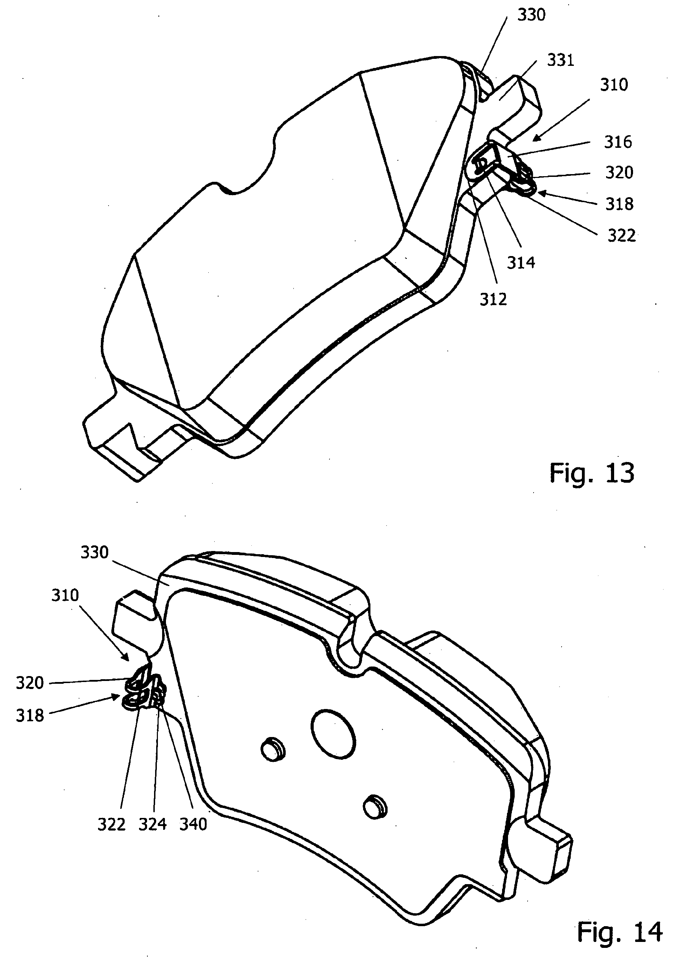

Eine weitere Ausführungsform wird in den Figuren 13 bis 17 gezeigt. Analog zur Ausführung nach Fig. 7 bis 12 umgreift hier das Dämpfungselement 310 die Belagrückenplatte 330 unterhalb eines Fortsatzes 331 und wird mittels eines stiftförmigen Positionierungsvorsprunges 340 und einer Rastvertiefung 350 positioniert. Das Dämpfungselement 310 weist einen Rastabschnitt 312 auf, der über eine Rastnase 314 in die Rastvertiefung 350 eingreift und an der Belagrückenplatte 330 flächig zum Anliegen kommt. Ein Verbindungsabschnitt 316 schließt sich in einem Winkel von mehr als 90° am Rastabschnitt 312 an und geht in einen u-förmig gestalteten Rastschenkel 318 über. Dieser Rastschenkel 318 weist einen ersten Abschnitt 320 auf, der sich in Richtung des Verbindungsabschnittes 316 fortsetzend erstreckt und in einen zweiten Abschnitt 322 übergeht, der um weniger als 180° zur Belagrückenplatte 330 hin gebogen ist. Der zweite Abschnitt 322 geht im Wesentlichen rechtwinklig in zwei Eingriffsschenkel 324 über.

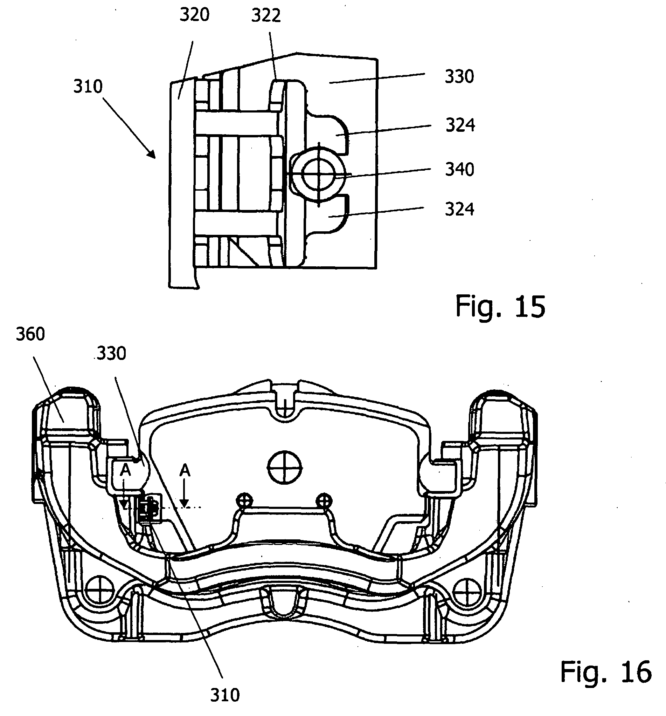

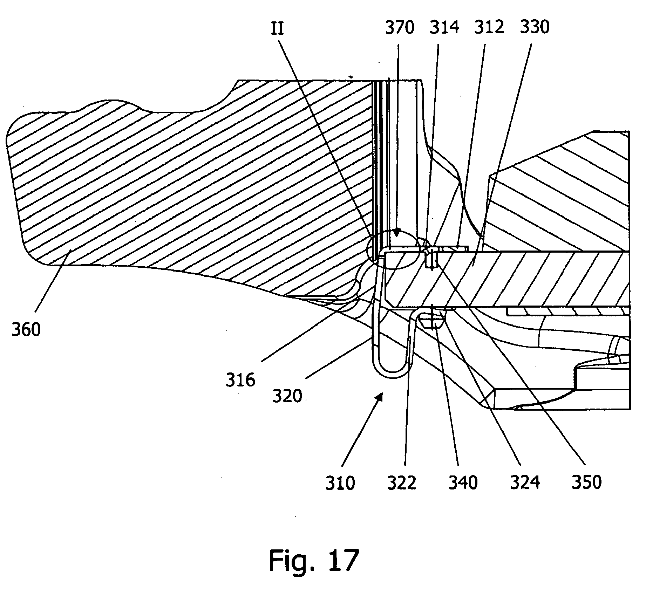

Aufgrund der vorstehend beschriebenen Geometrie von Rastabschnitt 312 und Verbindungsabschnitt 316 sowie erstem Abschnitt 320 und zweitem Abschnitt 322 des Rastschenkels 318 liegen die Eingriffsschenkel 324 im Wesentlichen zunächst in einem Winkel von mehr als 0° zu der ihnen gegenüberliegenden Oberfläche der Belagrückenplatte 330. Damit die Eingriffsschenkel 324 mit dem Positionierungsvorsprung 340 in Eingriff kommen können, muss das Dämpfungselement 310 also zur Belagrückenplatte 330 hin gebogen werden, was eine Vorspannkraft in das Dämpfungselement 310 einbringt und die Fixierung an der Belagrückenplatte 330 verbessert. Dies wird durch die Schnittdarstellung in Fig. 17 verdeutlicht, die einen Schnitt A-A gemäß Fig. 16 zeigt. Hierbei erkennt man, dass die sich dem Rastabschnitt 312 anschließenden Abschnitte des Dämpfungselements 310 mittels des Eingriffes der Eingriffsschenkel 324 am Positionierungsvorsprung 340 im Wesentlichen zur Belagrückenplatte 330 hin gebogen werden. Dadurch wird eine Vorspannkraft in das Dämpfungselement 310 eingebracht.

Das Halten der Eingriffsschenkel 324 durch den Positionierungsvorsprung 340 kann beispielsweise durch eine umlaufende Nut in dem Positionierungsvorsprung 340, in die die Eingriffsschenkel 324 eingreifen, realisiert werden und/oder durch ein elastisch verspannendes, aufspreizendes Aufschieben der Eingriffsschenkel 324 auf den Positionierungsvorsprung 340.

Wie durch den Bereich II in Fig. 17 markiert, liegt das Dämpfungselement 310 teilweise innerhalb einer schachtförmigen Ausnehmung 370 am Bremsträger 360 an. Dies gilt insbesondere für den Rastabschnitt 312 sowie für den Verbindungsbereich 316. Der Verbindungsbereich 316 steht vor dem Einbau in den Bremsträger 360 leicht schräg von der Belagrückenplatte 330 ab. Die schachtförmige Ausnehmung 370 des Bremsträgers 360 ist in dem Bereich, in dem der Verbindungsbereich 316 anliegt, nun derart gestaltet, dass der Verbindungsbereich 316 bzw. das Dämpfungselement 310 in Richtung der Belagrückenplatte 330 deformiert wird und somit die Vorspannung des Dämpfungselements 310 erhöht wird. Dies kann beispielweise mittels einer Wandung im betroffenen Bereich der Ausnehmung 370 realisiert werden, die einen geringeren Winkel zur gegenüberliegenden Fläche der Belagrückenplatte 330 aufweist, als der Winkel, in dem der Verbindungsabschnitt 316 von der Belagrückenplatte 330 absteht.

Alle anderen in Fig. 13 bis 17 dargestellten Elemente entsprechen den vorangehend beschriebenen Elementen und deren Funktionen.

### Bezugszeichenliste

- 1: Bremsbelaganordnung
- 10: Dämpfungselement
- 11: Anlagefläche
- 12: oberer Verbindungsabschnitt
- 13: unterer Verbindungsabschnitt
- 14: oberer Haltebereich
- 15: unterer Haltebereich
- 16: Befestigungsnase
- 17: Rastnase
- 18: Spannnase
- 19: Spannnase
- 20: Belagrückenplatte
- 21: Fortsatz
- 22: Hinterschnitt
- 30: Dämpfungsplatte
- 40: Reibbelag
- 110: Dämpfungselement
- 111: Stützarm
- 210: Dämpfungselement
- 211: Anlagefläche
- 212: Ausstellung
- 213: Verbindungsabschnitt
- 214: Klammerabschnitt
- 215: Rastabschnitt
- 220: Belagrückenplatte
- 221: Fortsatz
- 222: Positionierungswulst
- 223: Rastvertiefung
- 310: Dämpfungselement
- 312: Rastabschnitt
- 314: Rastnase
- 316: Verbindungsabschnitt
- 318: Rastschenkel
- 320: erster Abschnitt
- 322: zweiter Abschnitt
- 324: Eingriffsschenkel
- 330: Belagrückenplatte
- 331: Fortsatz
- 340: Positionierungswulst
- 350: Rastvertiefung
- 360: Bremsträger
- 370: Ausnehmung
- 500: Bremsbelaganordnung (Stand der Technik)
- 501: Belagrückenplatte
- 502: Fortsatz
- 503: Dämpfungsplatte
- 504: Fortsatz der Dämpfungsplatte
- 505: Teilabschnitt
- 506: Anlagefläche

## Patentansprüche

1. Bremsbelaganordnung für eine Fahrzeugbremse mit
- einem Reibbelag (40),
- einer Belagrückenplatte (220; 330) mit einem Fortsatz, der dazu eingerichtet ist, die Bremsbelaganordnung in der Fahrzeugbremse zu führen, und
- einer Dämpfungsplatte (30), die an der Belagrückenplatte (220; 330) angeordnet ist, wobei
die Bremsbelaganordnung ein separates Dämpfungselement (210; 310) aufweist, das zur Vermeidung von Reibschwingungen der Bremsbelaganordnung eingerichtet ist, und das Dämpfungselement (210; 310) mindestens ein Fixierelement aufweist, das auf die Vorder-, Rückseite und/oder lateral auf die Belagrückenplatte (220; 330) einwirkt, um das Dämpfungselement (210; 310) an der Belagrückenplatte (220; 330) zu fixieren, wobei das Fixierelement mindestens ein Rastelement (215; 314) umfasst, das mit einer Ausnehmung (223, 350) in der Belagrückenplatte (220; 330) in Eingriff bringbar und wobei das Dämpfungselement (210; 310) u-förmig ausgestaltet ist, **dadurch gekennzeichnet, dass** das Dämpfungselement (210; 310) an der Belagrückenplatte (220, 330) derart angeordnet ist, dass die Schenkel des Dämpfungselements (210; 310) die Belagrückenplatte (220; 330) seitlich in Einbaulage der Bremsbelaganordnung bezüglich der Bremsscheibe radial unterhalb des Fortsatzes umgreifen, wobei die jeweilige Kontaktfläche eine Dämpfungswirkung auf die Bremsbelaganordnung erzeugt.

2. Bremsbelaganordnung nach Anspruch 1,
**dadurch gekennzeichnet, dass** das Dämpfungselement (210; 310) derart mit der Belagrückenplatte (220; 330) verbunden ist, dass zumindest ein Teil des Dämpfungselements (210) spielfrei an der Belagrückenplatte (220; 330) anliegt, um eine Dämpfungswirkung zu erzeugen.

3. Bremsbelaganordnung nach einem der vorangehenden Ansprüche,
**dadurch gekennzeichnet, dass** das Dämpfungselement (210; 310) über eine Rastverbindung, eine Klebeverbindung und/oder mit Hilfe einer Vorspannkraft an oder mit der Belagrückenplatte (220; 330) verbunden ist.

4. Bremsbelaganordnung nach einem der vorangehenden Ansprüche ,
**dadurch gekennzeichnet, dass** das Fixierelement eine aufgrund elastischer Deformation des Fixierelements erzeugte Spannkraft aufweist, die auf das Dämpfungselement (210; 310) ausgeübt werden kann, um das Dämpfungselement (210; 310) an der Belagrückenplatte (220; 330) zu fixieren.

5. Bremsbelaganordnung nach einem der vorangehenden Ansprüche ,
**dadurch gekennzeichnet, dass** das Fixierelement eine Ausstellung (212) oder Eingriffsschenkel (324) aufweist, die bzw. der mit einem an der Belagrückenplatte (220; 330) angeordneten Positionsvorsprung (222; 340) in Eingriff bringbar ist, um das Dämpfungselement (210; 310) an der Belagrückenplatte (220; 330) zu fixieren und insbesondere zu positionieren.

6. Bremsbelaganordnung nach einem der vorangehenden Ansprüche,
**dadurch gekennzeichnet, dass** das Dämpfungselement (310) in einem an der Belagrückenplatte (330) angebrachten Zustand unter Vorspannung steht, wobei beim Einbau in einen Bremsträger (360) das Dämpfungselement (310) unter schwingungsreduzierender Vorspannung aufgenommen wird.

7. Bremsbelaganordnung nach einem der vorangehenden Ansprüche,
**dadurch gekennzeichnet, dass** das Dämpfungselement (210; 310) einen Teilabschnitt oder Arm aufweist, der sich auf der dem Reibbelag (40) zugewandten Seite befindet und derart ausgebildet ist, dass beim Erreichen der Verschleißgrenze des Reibbelags (40) ein Anlaufen gegen eine Bremsscheibe der Fahrzeugbremse ausgelöst wird, auf die der Reibbelag (40) einwirken kann, wobei sich hierbei ein Warngeräusch ergibt, das auf einen verschlissenen Reibbelag (40) hinweist.

8. Bremsbelaganordnung nach einem der vorangehenden Ansprüche,
**dadurch gekennzeichnet, dass** zusätzliches Dämpfungsmaterial, insbesondere eine Klebeschicht, zwischen dem Dämpfungselement (210; 310) und der Belagrückenplatte (220; 330), insbesondere an der Kontaktfläche, angeordnet ist, um eine Dämpfungswirkung zu erzeugen.

9. Bremsbelaganordnung nach einem der vorangehenden Ansprüche,
**dadurch gekennzeichnet, dass** das Dämpfungselement (210; 310) einteilig ist und aus gebogenem, insbesondere metallischem Blech oder Kunststoff hergestellt ist.

10. Scheibenbremsanordnung für ein Fahrzeugsystem mit einer Bremsscheibe und einer Bremsbelaganordnung nach einem der vorangehenden Ansprüche, wobei die Bremsbelaganordnung relativ zur Bremsscheibe bewegbar angeordnet ist, um auf die Bremsscheibe mittels eines Reibbelags (40) einzuwirken.

## Claims

1. Brake pad arrangement for a vehicle brake having
- a friction pad (40),
- a pad back plate (220; 330) having an extension which is adapted to guide the brake pad arrangement in the vehicle brake, and
- a damping plate (30) which is arranged on the pad back plate (220; 330),
wherein
the brake pad arrangement comprises a separate damping element (210; 310), which is adapted to avoid frictional vibrations of the brake pad arrangement, and the damping element (210; 310) has at least one fixing element which acts on the front side, rear side and/or laterally on the pad back plate (220; 330), in order to fix the damping element (210; 310) on the pad back plate (220; 330), the fixing element comprising at least one latching element (215; 314) which is engageable with a recess (223, 350) in the pad back plate (220; 330), and the damping element (210; 310) being of u-shaped configuration, **characterized in that** the damping element (210; 310) is arranged on the pad back plate (220, 330) in such a manner that the limbs of the damping element (210; 310) radially engage around the pad back plate (220; 330) laterally in an installation position of the brake pad arrangement in relation to the brake disk below the extension, the respective contact surface producing a damping effect on the brake pad arrangement.

2. Brake pad arrangement according to Claim 1,
**characterized in that** the damping element (210; 310) is connected to the pad back plate (220; 330) in such a manner that at least a part of the damping element (210) bears in a manner free from play against the pad back plate (220; 330), in order to produce a damping effect.

3. Brake pad arrangement according to one of the preceding claims, **characterized in that** the damping element (210; 310) is connected to or with the pad back plate (220; 330) via a latching connection, an adhesive-bonding connection and/or with the aid of a biasing force.

4. Brake pad arrangement according to one of the preceding claims, **characterized in that** the fixing element has a clamping force which is produced owing to elastic deformation of the fixing element and can be exerted on the damping element (210; 310), in order to fix the damping element (210; 310) on the pad back plate (220; 330).

5. Brake pad arrangement according to one of the preceding claims, **characterized in that** the fixing element has an aperture (212) or engaging limb (324) which is engageable with a positioning projection (222; 340) arranged on the pad back plate (220; 330), in order to fix and in particular to position the damping element (210; 310) on the pad back plate (220; 330).

6. Brake pad arrangement according to one of the preceding claims, **characterized in that** the damping element (310) is biased in a state attached to the pad back plate (330), the damping element (310) being received under vibrationreducing biasing on installation in a brake carrier (360).

7. Brake pad arrangement according to one of the preceding claims, **characterized in that** the damping element (210; 310) has a portion or arm which is situated on the side facing the friction pad (40) and is formed in such a manner that, when the wear limit of the friction pad (40) is reached, a striking of a brake disc of the vehicle brake on which the friction pad (40) can act is initiated, thereby resulting in a warning noise indicating a worn friction pad (40).

8. Brake pad arrangement according to one of the preceding claims, **characterized in that** additional damping material, in particular an adhesive layer, is arranged between the damping element (210; 310) and the pad back plate (220; 330), in particular at the contact surface, in order to produce a damping effect.

9. Brake pad arrangement according to one of the preceding claims, **characterized in that** the damping element (210; 310) is of one part and is produced from bent, in particular sheet metal or plastic.

10. Disc brake arrangement for a vehicle system having a brake disc and a brake pad arrangement according to one of the preceding claims, the brake pad arrangement being arranged so as to be movable relative to the brake disc in order to act on the brake disc by means of a friction pad (40).

## Revendications

1. Système de garniture de frein pour frein de véhicule, comprenant
- une garniture de friction (40),
- une plaque porte-garniture (220 ; 330) comportant un prolongement qui est conçu pour guider le système de garniture de frein dans le frein de véhicule, et
- une plaque d'amortissement (30) qui est disposée sur ladite plaque porte-garniture (220 ; 330),
ce système de garniture de frein présentant un élément amortisseur (210 ; 310) distinct qui est conçu pour éviter les vibrations induites par le frottement dans le système de garniture de frein, et cet élément amortisseur (210 ; 310) présentant au moins un élément de fixation qui agit sur la face avant, la face arrière et/ou latéralement sur la plaque porte-garniture (220 ; 230) pour fixer l'élément amortisseur (210 ; 310) sur la plaque porte-garniture (220 ; 330), cet élément de fixation comportant au moins un élément d'encliquetage (215 ; 314) qui peut être amené en prise avec un évidement (223, 350) dans la plaque porte-garniture (220 ; 330), et l'élément amortisseur (210 ; 310) étant réalisé en forme de U,
**caractérisé en ce que** l'élément amortisseur (210 ; 310) est disposé de telle sorte sur la plaque porte-garniture (210 ; 310) que les bras de l'élément amortisseur (210 ; 310) enserrent la plaque porte-garniture (220 ; 330) latéralement en position montée du système de garniture de frein et par rapport au disque de frein radialement en dessous du prolongement, la surface de contact correspondante générant un effet d'amortissement sur le système de garniture de frein.

2. Système de garniture de frein selon la revendication 1,
**caractérisé en ce que** l'élément amortisseur (210 ; 310) est relié de telle sorte à la plaque porte-garniture (220 ; 330) qu'au moins une partie de l'élément amortisseur (210) est en contact sans jeu avec la plaque porte-garniture (220 ; 330) pour générer un effet d'amortissement.

3. Système de garniture de frein selon l'une des revendications précédentes, **caractérisé en ce que** l'élément amortisseur (210 ; 310) est relié à la plaque porte-garniture (220 ; 330) par l'intermédiaire d'une liaison par encliquetage, d'une liaison collée et/ou à l'aide d'une force de précontrainte.

4. Système de garniture de frein selon l'une des revendications précédentes, **caractérisé en ce que** l'élément de fixation présente une force de tension générée par la déformation élastique de l'élément de fixation, laquelle force peut s'exercer sur l'élément amortisseur (210 ; 310) pour fixer l'élément amortisseur (210 ; 310) sur la plaque porte-garniture (220 ; 330).

5. Système de garniture de frein selon l'une des revendications précédentes, **caractérisé en ce que** l'élément de fixation présente une réservation (212) ou un d'accouplement (324) laquelle ou lequel peut être amené en prise avec une saillie de positionnement (222 ; 340) disposée sur la plaque porte-garniture (220 ; 330) pour fixer et plus particulièrement positionner l'élément amortisseur (210 ; 310) sur la plaque porte-garniture (220 ; 330).

6. Système de garniture de frein selon l'une des revendications précédentes, **caractérisé en ce que** l'élément amortisseur (310) est sous précontrainte dans un état monté sur la plaque porte-garniture (330), l'élément amortisseur (310) étant, lors de son installation dans un support de frein (360), monté sous précontrainte de façon à réduire les vibrations.

7. Système de garniture de frein selon l'une des revendications précédentes, **caractérisé en ce que** l'élément amortisseur (210 ; 310) présente un segment partiel ou un bras qui se trouve sur le côté tourné vers la garniture de friction (40) et est réalisé de telle sorte que l'atteinte d'une limite d'usure de la garniture de friction (40) provoque une mise en contact contre un disque de frein du frein de véhicule, sur lequel disque peut agir la garniture de friction (40), ce contact produisant un signal d'avertissement sonore qui indique que la garniture de friction (40) est usée.

8. Système de garniture de frein selon l'une des revendications précédentes, **caractérisé en ce qu'**un matériau amortisseur supplémentaire, en particulier une couche de colle, est disposé entre l'élément amortisseur (210 ; 310) et la plaque porte-garniture (220 ; 330), en particulier sur la surface de contact pour générer un effet d'amortissement.

9. Système de garniture de frein selon l'une des revendications précédentes, **caractérisé en ce que** l'élément amortisseur (210 ; 310) est réalisé d'un seul tenant à partir d'un matériau plié, en particulier à partir de tôle métallique pliée, ou à partir d'une matière synthétique.

10. Système de frein à disque pour un système de véhicule muni d'un disque de frein et d'un système de garniture de frein selon l'une des revendications précédentes, le système de garniture de frein étant monté mobile par rapport au disque de frein pour agir sur ce dernier au moyen d'une garniture de friction (40).
